# EUROPÄISCHE PATENTSCHRIFT

(11) **EP 3 594 430 B1**
(45) Veröffentlichungstag und Bekanntmachung des Hinweises auf die Patenterteilung: **07.06.2023**
(21) Anmeldenummer: 19195907.1
(22) Anmeldetag: 09.11.2016
(51) Int. Cl.: E04F 15/18, B32B 27/40, B32B 27/06, B32B 27/08, B32B 27/20, B32B 27/36, B32B 7/12, B32B 5/02

(54) **UNTERLEGEMATTE FÜR FUSSBODENBELÄGE**
UNDERLAY MAT FOR FLOOR COVERING
TAPIS DE SOL POUR PLANCHERS

(30) Priorität: 13.11.2015 DE 202015106139 U
(43) Veröffentlichungstag der Anmeldung: 15.01.2020
(62) Teilanmeldung aus: 16197897.8
(73) Patentinhaber: Windmöller GmbH, 32832 Augustdorf (DE)
(72) Erfinder: Rose, Stefan, 59581 Warstein (DE); Kruse, Georg, 32052 Herford (DE); Windmöller, Ulrich, 33758 Schloß Holte-Stukenbrock (DE)
(74) Vertreter: Wagner Albiger & Partner Patentanwälte mbB

(56) Entgegenhaltungen:
- WO-A1-00/70168
- WO-A1-2014/117181
- DE-A1-102005 002 303
- FR-A1- 2 805 836
- FR-A1- 2 831 909
- E. WICKLEIN GMBH: "ewifoam Acoustic Insulation : "Trittschalldämmungen & Parkettunterlagsbahnen" Produkte 2009/2010", KATALOGUE PRODUKTE 2009/2010, 1. Januar 2009 (2009-01-01), Seiten 1-35, XP055540996,

## Beschreibung

Die vorliegende Erfindung betrifft eine Unterlegematte für Fußbodenbeläge.

Fußbodenbeläge existieren in einer großen Vielfalt von Ausführungsformen. Neben den sehr verbreiteten Bodenpaneelen aus Holz oder Holzwerkstoffen werden zunehmend auch Beläge aus Kunststoffmaterialien wie etwa PVC oder neuerdings Polyurethan (PU) eingesetzt. In der Regel werden solche Bodenbeläge unmittelbar auf den Untergrund aufgeklebt, beispielsweise mittels eines auf den Estrich aufgetragenen Flüssigklebers.

Solche Fußböden weisen allerdings eine unzureichende Trittschalldämmung und Gehschallreduzierung auf. Auch der Gehkomfort ist nicht zufriedenstellend. Darüber hinaus soll der Bodenbelag möglichst einfach, schnell und sauber zu verlegen sein, was im Fall der Verwendung eines Flüssigklebers nur mit hoher Sorgfalt und viel Erfahrung möglich ist. An sich ist es erwünscht, auch flexible Bodenbelagselemente der oben erwähnten Art schwimmend zu verlegen, so wie es z.B. von Holzpaneelen mit Verriegelungsprofilen bekannt ist. Mit den bekannten Mitteln ist dies jedoch bisher nicht möglich. Beispielsweise lassen sich die Unterlegematten, die zur schwimmenden Verlegung von Laminatfußböden eingesetzt werden, nicht für derartige Kunststoffbeläge einsetzen, da sie nicht die gewünschten Anforderungen erfüllen. Eine derartige Matte sollte gute Eigenschaften hinsichtlich der Trittschall- und Gehschalldämmung aufweisen, dennoch aber sehr dünn sein und dauerhaft elastisch und flexibel bleiben, um punktuelle Unebenheiten des Untergrunds ausgleichen zu können und ein gutes Rückstellverhalten gegenüber punktuellen Belastungen aufzuweisen. Weitere gewünschte Eigenschaften sind eine gute Rückbaubarkeit des Bodenbelags und eine hohe Dimensionsstabilität.

Im Zusammenhang mit Kunststofffußböden stellen die gewachsenen Anforderungen an deren Umweltverträglichkeit eine zusätzliche Herausforderung dar. Beispielsweise enthalten PVC-Materialien häufig schädliche Stoffe wie z.B. Weichmacher, die als gesundheitsschädlich gelten. Die Unterlegematte soll möglichst frei von solchen umwelt- oder gesundheitsschädlichen Stoffen sein, ohne dass ihre mechanischen Eigenschaften wie etwa ihre Flexibilität und Elastizität beeinträchtigt sind. Gleichzeitig soll sie selbst nicht durch Emissionen beeinträchtigt werden, die aus den darauf verlegten Fußbodenbelägen, wie etwa PVC-Belägen, nach unten in die Matte eindringen können. Beispielsweise besteht die Gefahr, dass die Unterlegematte durch die bereits erwähnten Weichmacher oder auch andere Stoffe auf Dauer zerstört wird.

Aus der WO 2014/117181 A1 ist eine Unterlegematte mit einer flexiblen Trägerschicht bekannt, an deren Unterseite eine Dämmschicht und an deren Oberseite ein Selbstklebefilm mit einer abziehbaren Schutzfolie angeordnet sind.

Es ist daher eine Aufgabe der vorliegenden Erfindung, eine neuartige Unterlegematte für Fußbodenbeläge zu schaffen, die einfach und sauber zu verlegen ist und praktisch vollständig emissionsfrei ist, selbst aber auch nicht durch die Emissionen aus einem darauf verlegten Fußbodenbelag zu beeinträchtigen ist, so dass sie die gewünschten mechanischen Eigenschaften dauerhaft beibehält. Diese Unterlegematte sollte ferner die oben erwähnten Anforderungen an Trittschalldämmung, Gehschallreduzierung, Elastizität, Rückstellverhalten, Dimensionsstabilität und Rückbaubarkeit erfüllen.

Diese Aufgaben werden erfindungsgemäß durch eine Unterlegematte mit den Merkmalen des Anspruchs 1 gelöst.

Die erfindungsgemäße Unterlegematte umfasst eine Schicht aus Polyurethan (PU), die für die maßgeblichen Eigenschaften bezüglich der Trittschalldämmung, des Gehkomforts, der Elastizität und Flexibilität sowie des Resteindruckverhaltens sorgt. Die Verwendung von Polyurethan für diese Schicht stellt einen großen Fortschritt gegenüber Kunststoffen dar, die umweltschädliche Zusatzstoffe enthalten. Es kann insbesondere Polyurethan verwendet werden, das aus nachwachsenden Rohstoffen wie etwa entsprechenden Raps- und Rizinusölen hergestellt wird und frei von jeglichen schädlichen Zusatzstoffen wie etwa Weichmachern, Formaldehyd, Schwermetallen oder dergleichen mehr ist. Die Polyurethanschicht ist damit vollständig emissionsfrei und äußerst umweltfreundlich, ohne dass Kompromisse bezüglich ihrer dämmenden Eigenschaften oder ihrer Stabilität gemacht werden müssen. Insbesondere kann die Polyurethanschicht sehr flexibel und biegsam sein und dennoch im verlegten Zustand eine stabile, dämmende Schicht bilden.

Auf der Unterseite der Polyurethanschicht befindet sich eine Schicht, wobei die Schicht aus einem Material ist, das derart weich ist, dass eine Unebenheit auf einem Untergrund, auf dem die Unterlegematte verlegt werden kann, sich in die Schicht und bis in die Polyurethan-Schicht hinein eindrücken lässt. Diese Schicht ist vorzugsweise ein Vlies. Auf der Oberseite der Polyurethanschicht befindet sich ein Selbstklebefilm, der eine Trägerfolie, eine auf die Trägerfolie aufgebrachte Klebstoffschicht und ein Gittergelege aus Fasern umfasst, das in die Klebstoffschicht eingebettet ist. Der Klebstoff dient dazu, mit dem auf die Unterlegematte aufgelegten Fußbodenbelag verklebt zu werden. Hierdurch wird die erfindungsgemäße Unterlegematte bereits fertig zur Installation des Fußbodenbelags ausgerüstet, d.h., der Auftrag eines flüssigen Klebstoffs erübrigt sich. Die Klebstoffschicht wird durch das Gittergelege stabilisiert. Durch geeignete Wahl des Klebstoffs sind anfängliche Korrekturen beim Verlegen der Elemente des Fußbodenbelags möglich. Ein späteres Aushärten des Klebstoffs schafft die gewünschte stabile Verbindung des fertig installierten Fußbodenbelags mit der Unterlegematte.

Der Selbstklebefilm wird auf seiner Oberseite durch eine abziehbare Schutzfolie abgedeckt. Die Unterlegematte ist somit leicht handhabbar, etwa als aufgerolltes Bahnenmaterial. Nach bzw. während des Ausrollens kann die Schutzfolie abgezogen werden, um den Selbstklebefilm freizulegen.

Die erfindungsgemäße Unterlegematte bietet eine optimale Kombination aus Flexibilität, Elastizität und Stabilität. Letztere wird insbesondere durch die Trägerfolie und das Gittergelege gewährleistet.

Gemäß einer bevorzugten Ausführungsform der vorliegenden Erfindung enthält die Polyurethanschicht außer Polyurethan (PU) zusätzlich mineralische Füllstoffe zur Gewichtserhöhung. Bei diesen Füllstoffen kann es sich beispielsweise um Sand oder Kreide handeln.

Vorzugsweise beträgt die Dichte der Polyurethanschicht einschließlich der Füllstoffe bis zu 1800 kg/m³.

Weiter vorzugsweise beträgt das spezifische Gewicht des Polyurethans in der Polyurethan-Schicht 800 bis 1200 kg/m³.

Erfindungsgemäß beträgt die Dicke der Polyurethanschicht 1 bis 5 mm, vorzugsweise ca. 2 mm.

Gemäß einer weiteren bevorzugten Ausführungsform der Erfindung besteht die Trägerfolie aus Polyethylenterephthalat (PET).

Gemäß einer weiteren bevorzugten Ausführungsform der Erfindung ist der Klebstoff des Selbstklebefilms ein Acrylatkleber.

Weiter vorzugsweise ist die Trägerfolie unmittelbar auf die Oberseite der Polyurethan-Schicht aufgebracht. Hierdurch wird ein fester Verbund zwischen der stabilen Trägerfolie und der Polyurethanschicht gebildet, die elastische Eigenschaften aufweisen kann.

Gemäß einer weiteren bevorzugten Ausführungsform ist das Vlies unmittelbar auf die Unterseite der Polyurethanschicht aufgebracht und bildet die Unterseite der Unterlegematte. Unebenheiten des Untergrundes, auf dem die Unterlegematte verlegt wird, können sich somit durch das Vlies hindurch in die Polyurethanschicht eindrücken. Die Unterlegematte passt sich hierdurch gut an unebene Untergründe an.

Im folgenden wird eine bevorzugte Ausführungsform der Erfindung anhand der Zeichnung näher erläutert.

Die einzige Figur ist ein schematischer Querschnitt durch eine Ausführungsform der erfindungsgemäßen Unterlegematte.

Die in der Figur dargestellte Unterlegematte ist in ihrer Gesamtheit mit der Bezugsziffer 10 bezeichnet. Sie stellt ein Schichtgebilde dar, das Schichten aus unterschiedlichen Materialien mit unterschiedlichen mechanischen und chemischen Eigenschaften enthält und welche im Folgenden näher erläutert werden sollen.

Die Unterlegematte 10 ist gemäß ihrer vorgesehenen Orientierung bei der Verlegung abgebildet, d.h. die auf dem Untergrund (z.B. Estrich) aufliegende Seite ist ihre Unterseite, die in der Figur unten ist, während auf ihrer Oberseite ein nicht näher dargestellter Bodenbelag aufliegt. Die hier und in der übrigen Anmeldung verwendeten Begriffe "Unterseite" und "Oberseite" sollen jedoch nicht die vorliegende Erfindung auf eine bestimmte Orientierung der Unterlegematte 10 beschränken, sondern dienen lediglich zur anschaulichen Unterscheidung der gegenüberliegenden Seiten der Unterlegematte 10. Ferner ist die Darstellung der Schichtdicken und Größenverhältnisse in der Figur nicht maßstabsgerecht und ebenfalls nicht beschränkend.

Im einzelnen umfasst die Unterlegematte 10 eine Polyurethanschicht 14, die aus Polyurethan (PU) sowie zusätzlichen mineralischen Füllstoffen 16 wie etwa Sand oder Kreide besteht, welche eine höhere Dichte als das Polyurethan aufweisen und daher das Gewicht der Polyurethanschicht 14 sowie der gesamten Unterlegematte 10 erhöhen. Die Füllstoffe 16 sind relativ homogen innerhalb der Polyurethanschicht 14 verteilt. Ihre Darstellung in der Figur ist lediglich schematisch und stellt die Dichte ihrer Verteilung nicht maßstabsgerecht dar.

Die Polyurethanschicht 14 weist einschließlich der Füllstoffe 16 eine Dichte von bis zu 1800 kg/m³ auf. Das darin enthaltene Polyurethan weist eine Dichte zwischen 800 und 1200 kg/m³ auf. Ihre Dicke liegt zwischen 1 und 5 mm, vorteilhafterweise etwa bei 2 mm.

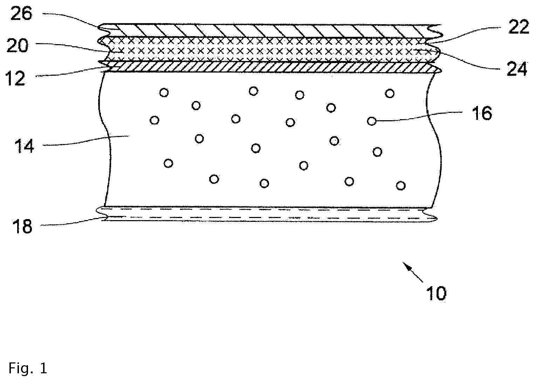

Die Polyurethanschicht 14 ist an ihrer Unterseite, die in Fig. 1 entsprechend der üblichen Ausrichtung bei der Verlegung der Unterlegematte 10 unten angeordnet ist, durch ein Vlies 18 abgedeckt. Das Vlies 18 bildet eine relativ weiche Fasermatte, die beispielsweise durch einen Sprühkleber auf die Unterseite der Polyurethanschicht 14 aufgeklebt sein kann. Die Unterlegematte 10 besteht also auf ihrer Unterseite aus relativ weichen Materialien. Eine Unebenheit auf dem Untergrund, auf dem die Unterlegematte 10 verlegt wird, kann sich auf diese Weise in das Vlies 18 und bis in die Polyurethanschicht 14 hinein eindrücken. Die Unterlegematte 10 sorgt somit für einen guten Ausgleich solcher Unebenheiten.

Auf die Oberseite der Polyurethanschicht 14 ist ein Selbstklebefilm 20 aufgebracht, der eine Trägerfolie 12, eine auf der Trägerfolie 12 angeordnete Klebstoffschicht 22 und ein darin eingebettetes Gittergelege 24 umfasst. Das Gittergelege 24 besteht aus locker, d.h. mit relativ großen Zwischenräumen verlegten Fasern, die problemlos vom Klebstoff durchdrungen werden können. Bei dem Klebstoff der Klebstoffschicht 22 kann es sich beispielsweise um einen Acrylatkleber handeln. Die Klebeeigenschaften sowie die Fließfähigkeit werden somit durch das Gittergelege 24 nicht beeinträchtigt. Andererseits sorgt das Gittergelege 24 für eine zusätzliche Stabilität des Schichtgebildes der Unterlegematte 10 in ihrem oberen Querschnittsbereich.

Die Oberseite des Selbstklebefilms 20 ist durch eine Schutzfolie 26 abgedeckt, die von Hand abgezogen werden kann. Die Schutzfolie 26 haftet also lediglich auf dem Klebstoff 22 des Selbstklebefilms 20 und geht mit diesem keinen festen Verbund ein. Der Selbstklebefilm 20 bietet nach dem Abziehen der Schutzfolie 26 eine Klebefläche zur Aufnahme und Verbindung mit einem darauf anzuordnenden Fußbodenbelag.

Bei Verwendung eines Acrylatklebers für die Klebstoffschicht 22, so wie im vorliegenden Ausführungsbeispiel, lässt sich ein auf den Selbstklebefilm 20 unmittelbar nach dem Abziehen der Schutzfolie 26 aufgelegtes Fußbodenelement, wie etwa ein Fußbodenpaneel, in seiner Position korrigieren, d.h. in gewissem Umfang seitlich verschieben, bis es eine endgültige Position erreicht hat. Nach dem Aushärten des Acrylatklebers wird ein fester Schichtverbund zwischen dem Fußbodenbelag und der darunter angeordneten Unterlegematte 10 gebildet, der für vorteilhafte Eigenschaften des fertig verlegten Fußbodens sorgt. Da jedoch das Vlies 18 an der Unterseite der Unterlegematte 10 lediglich lose auf dem Untergrund aufliegt, ist der Fußboden rückstandsfrei rückbaubar.

Ein Acrylatkleber ist zudem sehr beständig gegenüber Weichmachern, die insbesondere aus Bodenbelägen aus PVC (Polyvinylchlorid) austreten können. Die vorliegende Unterlegematte 10 eignet sich somit gut zur Verlegung solcher Bodenbeläge aus PVC.

Die Unterlegematte 10 weist trotz relativ geringer Dicke ein hohes Gewicht auf, sowie eine große Flexibilität und Biegsamkeit, so dass sie sich ohne weiteres als Bahn aufrollen und bequem vor Ort verarbeiten lässt. Die Schichten in ihrem oberen Querschnittsbereich, also insbesondere die Trägerfolie 12 und das Gittergelege 24 innerhalb des Selbstklebefilms 20, verleihen ihr eine hohe Stabilität und eine gute Widerstandsfähigkeit gegenüber punktuellen mechanischen Belastungen. Hingegen sorgt die darunter angeordnete Polyurethanschicht 14 für eine ausreichende Elastizität.

### Produktbeispiel

Ein Produkt mit dem oben beschriebenen und in der Figur dargestellten Schichtaufbau gemäß der vorliegenden Erfindung kann beispielsweise die folgenden technischen Spezifikationen aufweisen.

| | |
|---|---|
| Dicke: | DIN CEN/TS 16354 |
| ∼1,80 mm (± 0,15 mm) | |
| Flächengewicht: | |
| ∼2,60 kg/m² (± 0,15 kg/m²) | |
| Länge: | DIN CEN/TS 16354 |
| Bis 8.500 mm (± 15,00 mm) | |
| Breite: | |
| 1.000 mm (± 1,00 mm) | DIN CEN/TS 16354 |
| Gehschallreduzierung: | EPLF Norm WD 021029-5 |
| bis zu 6% (± 2%) | |
| Trittschallreduzierung: | DIN EN 16251-1 |
| Bis zu 15 dB (± 2 dB) | |
| Wärmedurchlasswiderstand: | DIN CEN/TS 16354 (geeignet für Fußbodenheizung) |
| 0,01 m²K/W | |
| Resteindruck: | (DIN EN 3385) |
| < 0,20 mm | |
| Druckfestigkeit: | DIN EN 826 |
| > 45 t/m² (> 450 kPa) | |
| Beständigkeit gg. Druck-Kriechverformung: | DIN CEN/TS 16354 |
| > 55 kPa | |
| Beständigkeit bei dynamischen Belastungen: | DIN CEN/TS 16354 |
| > 100.000 Zyklen | |
| Stoßbeanspruchung: | DIN CEN/TS 16354 |
| ∼ 750 mm | |
| Ausgleich punktueller Unebenheiten: | DIN CEN/TS 16354 |
| ∼ 0,55 mm | |
| Brandklassifikation: | DIN EN 13501-1 (ohne Oberbelag) |
| Efl | |

Bei diesem Produkt ist ein leichtes Zuschneiden mit einem Cutter-Messer möglich. Das Produkt ist dauerhaft weichmacherbeständig, und die Klebeschicht weist eine geringe Anfangsadhäsion für gegebenenfalls notwenige Korrekturarbeiten auf. Die Klebewirkung verstärkt sich bis hin zur komplett festen Anhaftung des Oberbelags. Diese Unterlegematte eignet sich zur Verwendung unter PVC-Zuschnitten (Dryback), LPT-, LVT- und Laminat-Systemen.

## Patentansprüche

1. Unterlegematte (10) für Fußbodenbeläge, umfassend:
- eine Polyurethan-Schicht (14), wobei die Dicke der Polyurethan-Schicht (14) 1 bis 5 mm beträgt,
- ein Vlies (18) auf der Unterseite der Polyurethan-Schicht (14),
- einen Selbstklebefilm (20) auf der Oberseite der Polyurethan-Schicht (14), umfassend eine Trägerfolie (12), eine auf die Trägerfolie (12) aufgebrachte Klebstoffschicht (22),
- und eine abziehbare Schutzfolie (26) auf der Oberseite des Selbstklebefilms (20),
**dadurch gekennzeichnet, dass** ein Gittergelege (24) aus Faser in die Klebstoffschicht (22) eingebettet ist.

2. Unterlegematte gemäß Anspruch 1, **dadurch gekennzeichnet, dass** die Polyurethan-Schicht (14) ausser Polyurethan (PU) zusätzlich mineralische Füllstoffe (16) zur Gewichtserhöhung enthält.

3. Unterlegematte gemäß Anspruch 2, **dadurch gekennzeichnet, dass** das spezifische Gewicht der Polyurethan-Schicht (14) einschließlich der Füllstoffe (16) bis zu 1800 kg/m³ beträgt.

4. Unterlegematte gemäß einem der Ansprüche 1 bis 3, **dadurch gekennzeichnet, dass** das spezifische Gewicht des Polyurethans in der Polyurethan-Schicht (14) 800 bis 1200 kg/m³ beträgt.

5. Unterlegematte gemäß einem der Ansprüche 1 bis 4, **dadurch gekennzeichnet, dass** die Dicke der Polyurethan-Schicht (14) etwa 2 mm beträgt.

6. Unterlegematte gemäß einem der vorhergehenden Ansprüche, **dadurch gekennzeichnet, dass** die Trägerfolie (12) aus Polyethylenterephthalat (PET) besteht.

7. Unterlegematte gemäß einem der vorhergehenden Ansprüche, **dadurch gekennzeichnet, dass** der Klebstoff (22) des Selbstklebefilms (20) ein Acrylatkleber ist.

8. Unterlegematte gemäß einem der vorhergehenden Ansprüche, **dadurch gekennzeichnet, dass** die Trägerfolie (12) unmittelbar auf die Oberseite der Polyurethan-Schicht (14) aufgebracht ist.

9. Unterlegematte gemäß einem der vorhergehenden Ansprüche, **dadurch gekennzeichnet, dass** das Vlies (18) unmittelbar auf die Unterseite der Polyurethan-Schicht (14) aufgebracht ist und die Unterseite der Unterlegematte (10) bildet.

## Claims

1. Underlay mat (10) for floor coverings, comprising:
- a polyurethane layer (14), wherein the thickness of the polyurethane layer (14) is 1 to 5 mm,
- a nonwoven fabric (18) on the underside of the polyurethane layer (14),
- a self-adhesive film (20) on the upper side of the polyurethane layer (14), comprising a carrier film (12), an adhesive layer (22) applied to the carrier film (12),
- and a peelable protective film (26) on the upper side of the self-adhesive film (20),
**characterised in that** a mesh structure (24) of fibres is embedded in the adhesive layer (22).

2. Underlay mat according to claim 1, **characterised in that** the polyurethane layer (14) additionally contains mineral fillers (16) in addition to polyurethane (PU) to increase the weight.

3. Underlay mat according to claim 2, **characterised in that** the specific weight of the polyurethane layer (14) including the fillers (16) is up to 1800 kg/m³.

4. Underlay mat according to any one of claims 1 to 3, **characterised in that** the specific weight of the polyurethane in the polyurethane layer (14) is 800 to 1200 kg/m³.

5. Underlay mat according to any one of claims 1 to 4, **characterised in that** the thickness of the polyurethane layer (14) is about 2 mm.

6. Underlay mat according to any one of the preceding claims, **characterised in that** the carrier film (12) comprises polyethylene terephthalate (PET).

7. Underlay mat according to any one of the preceding claims, **characterised in that** the adhesive (22) of the self-adhesive film (20) is an acrylate adhesive.

8. Underlay mat according to any one of the preceding claims, **characterised in that** the carrier film (12) is applied directly to the upper side of the polyurethane layer (14).

9. Underlay mat according to any one of the preceding claims, **characterised in that** the nonwoven fabric (18) is applied directly to the underside of the polyurethane layer (14) and forms the underside of the underlay mat (10).

## Revendications

1. Tapis de sous-couche (10) pour des revêtements de plancher comprenant:
- une couche de polyuréthane (14), l'épaisseur de la couche de polyuréthane (14) étant de 1 à 5 mm,
- un non-tissé (18) sur le côté inférieur de la couche de polyuréthane (14),
- un film autocollant (20) sur le côté supérieur de la couche de polyuréthane (14), comprenant un film support (12), une couche de colle (22) appliquée sur le film support (12),
- et un film de protection (26) retirable sur le côté supérieur du film autocollant (20),
**caractérisé en ce qu'**une natte en treillis (24) en fibres est intégrée dans la couche de colle (22).

2. Tapis de sous-couche selon la revendication 1, **caractérisé en ce que** la couche de polyuréthane (14) contient hormis du polyuréthane (PU) en outre des substances de remplissage (16) minérales pour l'augmentation du poids.

3. Tapis de sous-couche selon la revendication 2, **caractérisé en ce que** le poids spécifique de la couche de polyuréthane (14) y compris les substances de remplissage (16) est de jusqu'à 1800 kg/m³.

4. Tapis de sous-couche selon l'une quelconque des revendications 1 à 3, **caractérisé en ce que** le poids spécifique du polyuréthane dans la couche de polyuréthane (14) est de 800 à 1200 kg/m³.

5. Tapis de sous-couche selon l'une quelconque des revendications 1 à 4, **caractérisé en ce que** l'épaisseur de la couche de polyuréthane (14) est d'environ 2mm.

6. Tapis de sous-couche selon l'une quelconque des revendications précédentes, **caractérisé en ce que** le film support (12) se compose de polytéréphtalate d'éthylène (PET).

7. Tapis de sous-couche selon l'une quelconque des revendications précédentes, **caractérisé en ce que** la colle (22) du film autocollant (20) est une colle acrylate.

8. Tapis de sous-couche selon l'une quelconque des revendications précédentes, **caractérisé en ce que** le film support (12) est appliqué directement sur le côté supérieur de la couche de polyuréthane (14).

9. Tapis de sous-couche selon l'une quelconque des revendications précédentes, **caractérisé en ce que** le non-tissé (18) est appliqué directement sur le côté inférieur de la couche de polyuréthane (14) et forme le côté inférieur du tapis de sous-couche (10).
